# EUROPÄISCHE PATENTSCHRIFT

(11) **EP 2 085 203 B1**
(45) Veröffentlichungstag und Bekanntmachung des Hinweises auf die Patenterteilung: **19.10.2011**
(21) Anmeldenummer: 08153329.1
(22) Anmeldetag: 26.03.2008
(51) Int. Cl.: B29C 45/00, B65D 8/14, B65D 81/26, B65D 81/38

(54) **Faltbehälter zum Transport von eisgekühlten Gütern**
Folding container for transporting ice-cooled cargo
Récipient pliable destiné au transport de marchandises congelées

(30) Priorität: 04.02.2008 DE 102008007340
(43) Veröffentlichungstag der Anmeldung: 05.08.2009
(60) Teilanmeldung: 11150656.4
(73) Patentinhaber: IFCO Systems GmbH, 82049 Pullach (DE)
(72) Erfinder: Ringler, Werner, 91085 Weisendorf (DE)
(74) Vertreter: Schoppe, Fritz

(56) Entgegenhaltungen:
- EP-A- 0 071 467
- DE-A1- 10 137 328
- DE-U1- 20 311 478
- DE-U1- 29 907 229
- US-A- 4 044 910

## Beschreibung

Die Erfindung bezieht sich auf einen Faltbehälter aus Kunststoff nach dem Oberbegriff des Patentanspruchs 1 (DE 299 07 229 U1).

Um frischen Seefisch oder andere eisgekühlte Nahrungsmittel zu verfrachten, ist es bisher üblich, die Güter -mit Eis bedeckt- in Styroporkisten zu verpacken und dann diese Kisten auf Paletten gestapelt zu transportieren. Obwohl Styropor leicht und gut thermo-isolierend ist, weist dieses Material einen großen Nachteil auf. Nach dem Transport kann Styropor nicht ausreichend gereinigt werden, d.h. bei zu schwacher Wasserspülung verbleiben unhygienische Reste an der Verpackung und bei zu starker Wasserspülung wird das Material beschädigt. Aus hygienischen Gründen kommt Styropor deshalb nur für Einweg-Behälter in Frage. Die Aufgabe der Erfindung besteht deshalb darin, einen mehrwegtauglichen Behälter insbesondere für frischen Seefisch oder für andere, eisgekühlte Nahrungsmittel und Güter vorzuschlagen.

Die Lösung liegt in einem Faltbehälter aus Kunststoff, dessen wesentliche Merkmale dem Anspruch 1 zu entnehmen sind. Zweckmäßige Weiterbildungen gehen aus den Ansprüchen 2 bis 7 hervor.

Der erfundene Faltbehälter hat den grundlegenden Vorteil, dass er nach dem Transport so von Fischresten gereinigt werden kann, dass er hygienisch einwandfrei für einen neuen Transport als Mehrweg-Behälter zur Verfügung steht. Um den Rücktransport als Leergut zu vereinfachen und um den logistischen Mehrweg-Kreislauf kostengünstig zu schließen, ist der Behälter zusammenfaltbar. Solche Klappkisten sind an sich in verschiedenen Ausführungen gut bekannt, aber nicht in einer Ausführung, die sich zum Transport von frischen, eisgekühlten Nahrungsmitteln eignet. Um eine gute Thermo-Isolierung ähnlich dem Wärmeübergang bei dem bekannten Styropormaterial zu erzielen, sind zumindest die Seitenwände des Faltbehälters doppelwandig ausgebildet. Dabei wird die Luftschicht oder das Luftpolster zwischen den zwei Wänden durch ein angeschweißtes Fußstück eingeschlossen. Ferner sind für einen Abfluss des schmelzenden Eiswassers spezielle Öffnungen im Bodenbereich vorgesehen.

Aus der Druckschrift DE 602 05 881 T2 sind bereits Behälter aus Kunststoff bekannt. Es handelt sich vorzugsweise um faltbare Schalen oder Faltkisten; jedoch können nach diesem Stand der Technik auch nicht faltende Schalen verwendet werden. Die faltbaren Behälter machen es möglich, Massengüter zu transportieren, während die Rückgabe und Aufbewahrung der leeren Behälter nur einen geringen Raum einnimmt. Transportiert werden beispielsweise verderbliche Güter wie Nahrungsmittel, wobei nach diesem Stand der Technik eine Verpackung von Pommes Frites in gefrorenem Zustand im Vordergrund steht.

Als Behältermaterial ist Spritzguss-Kunststoff vorgesehen, also ein Material, das als Mehrwegmaterial geeignet ist, weil es in einer Säuberungsstation gereinigt werden kann, beispielsweise durch Dampf. Es ist auch als Rycyclingmaterial geeignet.

Die Stirnwände und die Seitenwände des bekannten Behälters weisen geschlossene Wandabschnitte auf. Auch die Verbindungsräume zwischen den Seitenwandabschnitten sind vorzugsweise geschlossen. Bevorzugt ist bei diesen senkrechten Nähten eine selbstausrichtende Schließverbindung mit einem Stift vorgesehen; andere Kupplungseinrichtungen zum gegenseitigen Kuppeln der Seitenwände und der Stirnwände sind vorsehbar, aber nicht erläutert.

Als Verbindung der Stirnwände und der Seitenwände mit dem Boden werden lippenartige Filmscharniere bevorzugt, d.h. ein Zusammenbauen und Trennen der Wand- und Bodenelemente soll aufgabengemäß vermieden werden. Andere Scharniere als derartige Filmscharniere sind in diesem Stand der Technik nur allgemein angesprochen.

An der Oberkante jeder Faltschale kann eine Folie aufgesiegelt, aufgeklebt oder aufgeschweißt sein. Die Folie ist vorzugsweise gas- und flüssigkeitsdicht, so wie die ganze Faltschale gas- und flüssigkeitsdicht sein soll.

Nicht angesprochen oder berücksichtigt sind in der technischen Lehre der DE 602 05 881 T2:
- eine doppelwandige, thermo-isolierende Ausführung der Wandabschnitte,
- irgendwelche Öffnungen, um einem Abschmelzen von Kühleis und einem Abführen von Schmelzflüssigkeit nach Außen Rechnung zu tragen, und
- eine stapelbare Ausführung der Faltkisten, um mehrere Transportbehälter auch dann übereinander stapeln zu können, wenn sie mit der Folie abgedeckt sind.

Aus der deutschen Auslegeschrift DE 1 221 958 B ist ferner eine zusammenlegbare Kiste mit auf den Boden umlegbaren Wänden und mit einem Klappdeckel bekannt. Die bekannte Faltkiste kann bei Nichtgebrauch, insbesondere bei Rückführung als Leergut, raumsparend zusammengelegt werden. Die Kiste kann aus Kunststoff bestehen, wobei die schwenkbaren Kistenteile einstückig über an sich bekannte Filmscharniere ineinander übergehen.

Die freien Oberkanten der Seitenwände können nach Außen und Unten abgewinkelt sein, um am oberen Rand der Kiste leistenförmige Hohlträger zu bilden. Im Übrigen sind die Seitenwände weder doppelwandig noch geschlossen, sondern weisen hoch liegende Öffnungen zur Lüftung und zur Materialersparnis auf.

Die Seiten- und Stirnwände greifen in aufgerichteter Stellung mit U-förmigen Abkantungen ineinander. Als letztes Glied der Aufrichtung wird eine dieser Wände nach oben geklappt und schließt die Eckverbindungen. Verriegelungen sind nicht vorgesehen; vielmehr übergreift als zusätzliche Sicherung der Deckel die freien Oberkanten der Kistenseitenwände. Über die Deckeloberseite nach oben vorstehende, am Deckel angebrachte Leisten bilden eine Arretierung für einen weiteren, auf dem ersten Kasten aufgestapelten Kasten. Die Stapelbarkeit ist in diesem Stand der Technik - wegen eines geteilten Deckels - kompliziert geregelt. Nicht nur bilden die zum Deckel gehörenden Leisten die Arretierung für die aufgestapelte Kiste, sondern der geteilte Deckel hat auch noch hochstehende Laschen, die in Verrippungen des jeweils aufgestapelten Kistenbodens eintauchen müssen.

Dieser technischen Lehre fehlt es an folgenden Merkmalen:
- keine Verriegelung von Seiten- und Stirnwänden untereinander, stattdessen angewiesen auf den Deckel zwecks Sicherung
- doppelwandige Ausführung als Hohlträgerleiste nur im obersten Bereich und nur zwecks Tragfähigkeit, nicht zwecks Thermo-Isolierung
- Seitenwände nicht geschlossen und nicht isolierend
- keine Abtropföffnungen im Bodenbereich
- keine Stapelbarkeit ohne den Deckel.

Auch der folgende weitere Stand der Technik kommt der Erfindung nicht näher:
WO 98/30454 A1 zeigt einen ähnlichen Faltbehälter mit Deckel.
WO 93/24378 A1 und US 3,360,180 A zeigen ähnliche Faltbehälter ohne Deckel.
US 5,704,193 A zeigt eine ähnliche Konstruktion eines Faltbehälters, aber aus Karton.

Eine Verriegelung nach dem Stand der Technik DE 101 37 328 B4 betrifft den bekannten Liftlock-Verschluß gemäß dem Unteranspruch 5.

Die Druckschrift DE 10 2004 032 422 A1 betrifft eine bekannte Deckfolie gemäß dem Unteranspruch 7.

Ein Ausführungsbeispiel der Erfindung wird anhand der Patentzeichnungen erläutert. Es zeigen:

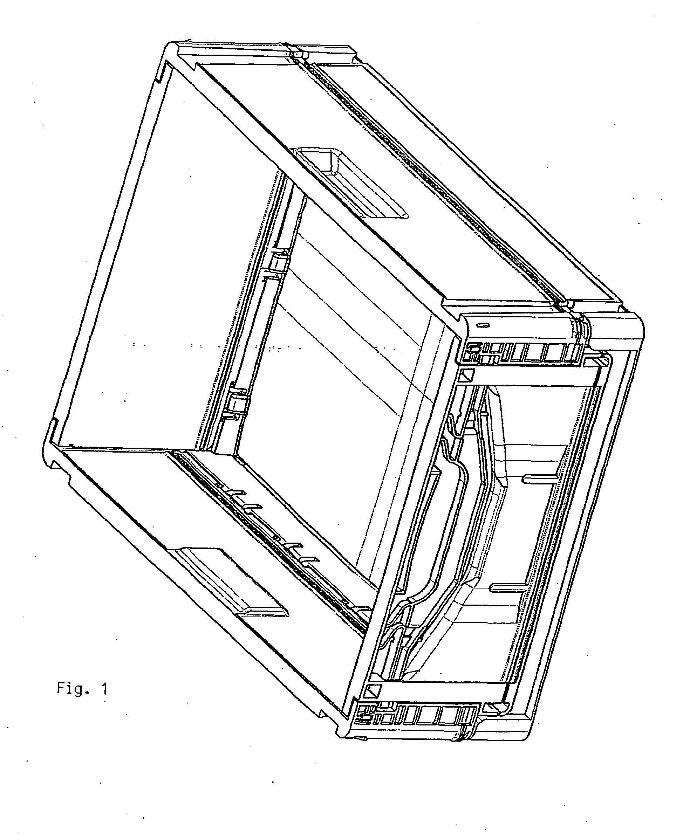

Fig. 1 ein Ausführungsbeispiel der Fischkiste in perspektivischer Ansicht;

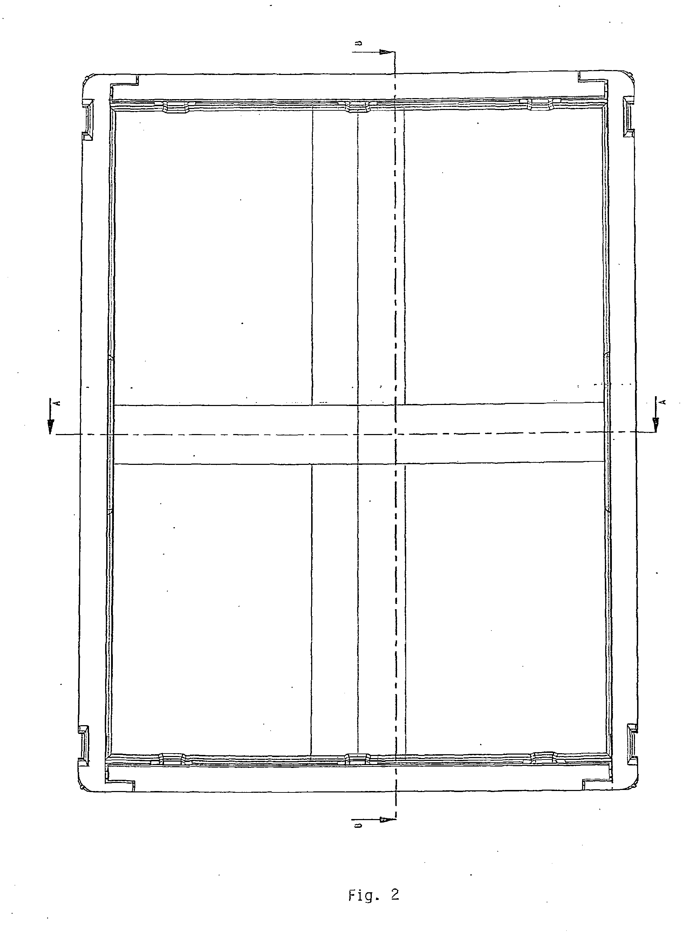

Fig. 2 ein Grundriss des Ausführungsbeispiels der Fischkiste gemäß Figur 1;
Fig. 3 eine Seitenansicht der Längsseite der Fischkiste gemäß Fig. 1;
Fig. 4 ein Längsschnitt B-B durch die Fischkiste gemäß Fig. 2;

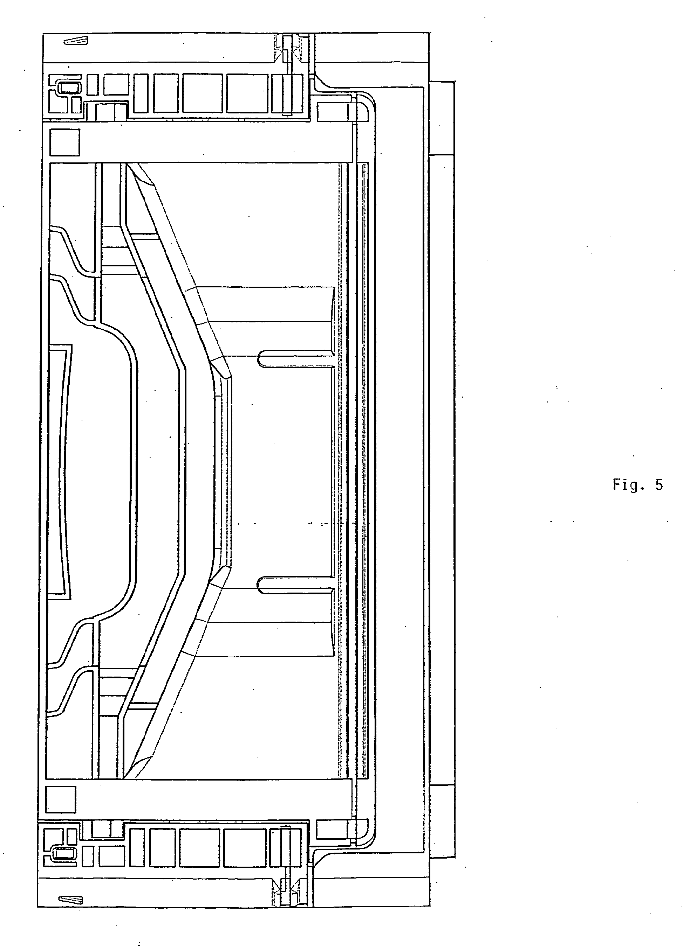

Fig. 5 eine Seitenansicht (relativ vergrößert) eines kurzen Seitenteils der Fischkiste gemäß Fig. 1;
Fig. 6 ein Querschnitt A-A durch die Fischkiste gemäß Fig. 2;

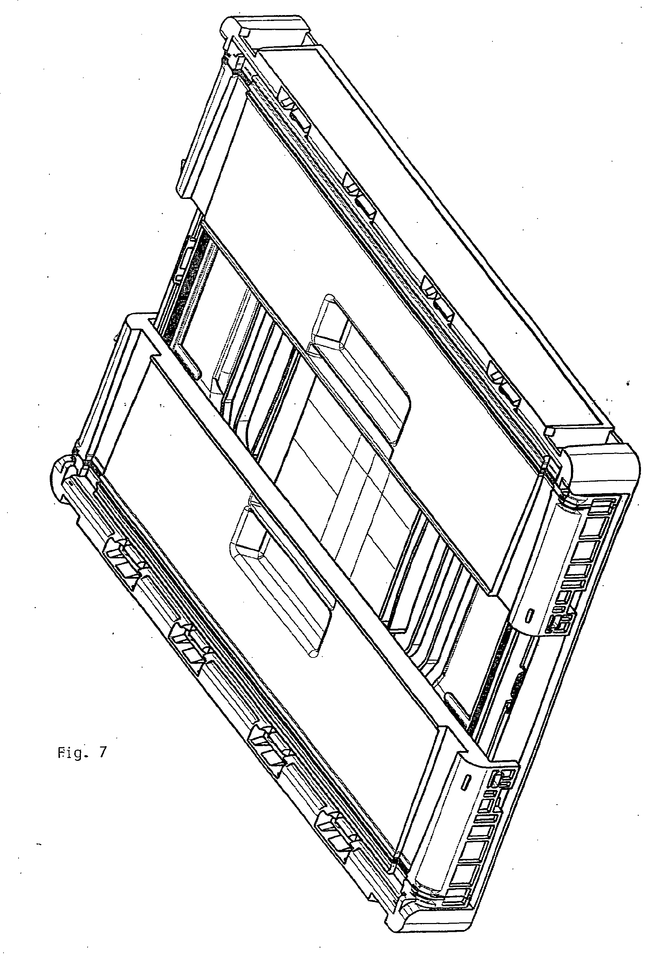

Fig. 7 eine perspektivische Ansicht der Fischkiste wie in Fig. 1, jedoch alle Seitenwände zusammengeklappt; und

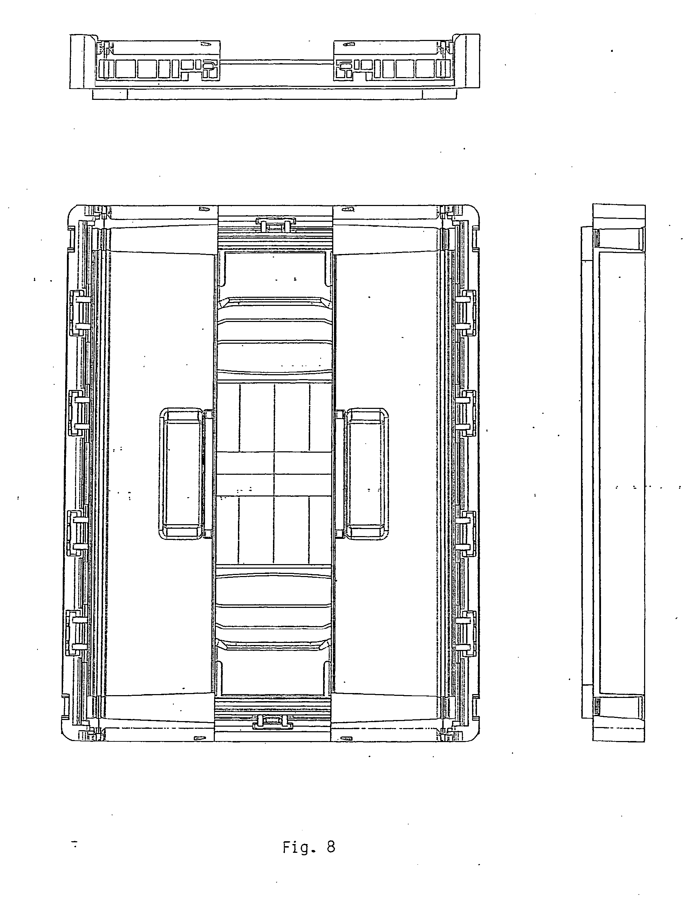

Fig. 8 einen Grundriss, eine Längsseitenansicht und Querseitenansicht der zusammengeklappten Fischkiste gemäß Fig. 7.

Der Boden des Faltbehälters ist leicht schalenförmig ausgeführt, d.h. die Bodenplatte ist sowohl bei den langen Seitenwänden als auch bei den kurzen Seitenwänden ansatzweise nach oben gezogen. Dieser Ansatz für die Scharniere der Seitenwände ist bei den langen Seitenwänden etwas weiter nach oben gezogen als bei den kurzen Seitenwänden, weil die kurzen Seitenwände zuerst eingeklappt werden, nämlich direkt auf die Bodenplatte, und die langen Seitenwände anschließend darüber eingeklappt werden, nämlich auf die kurzen Seitenwände.

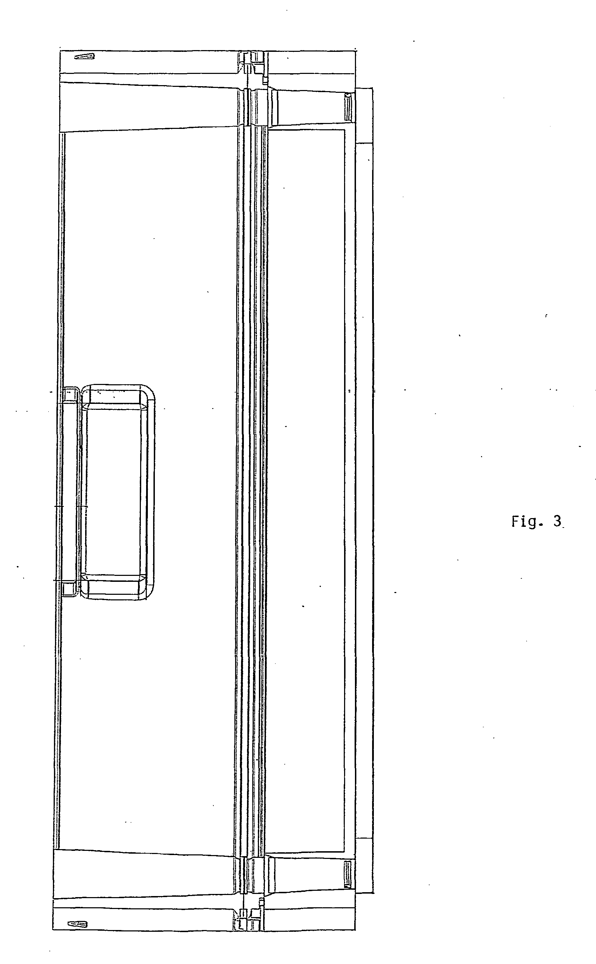

In die so entstandene Bodenschale sind an den vier Ecken vier Öffnungen eingelassen, welche die Eigenschaft haben, Flüssigkeit, die sich im Bereich der Bodenschale angesammelt hat, nach außen abzuführen (am besten zu erkennen in Fig. 3). Bei diesen Flüssigkeiten kann es sich um organische Flüssigkeit des transportierten Nahrungsmittels handeln, insbesondere aber um Schmelzwasser, welches von der Eiskühlung für das Nahrungsmittel herrührt. In der Praxis wird es sich um eine Mischung solcher Flüssigkeiten handeln.

Bei bestimmten Produkten wie zum Beispiel Fleisch kann es sinnvoll sein, die Abflussöffnungen vorübergehend mittels Stopfen oder Stöpseln zu verschließen, um ein Abtropfen nach außen vorübergehend zu verhindern. Die Stopfen können zum Beispiel als mitgelieferte Gummistöpsel ausgebildet sein.

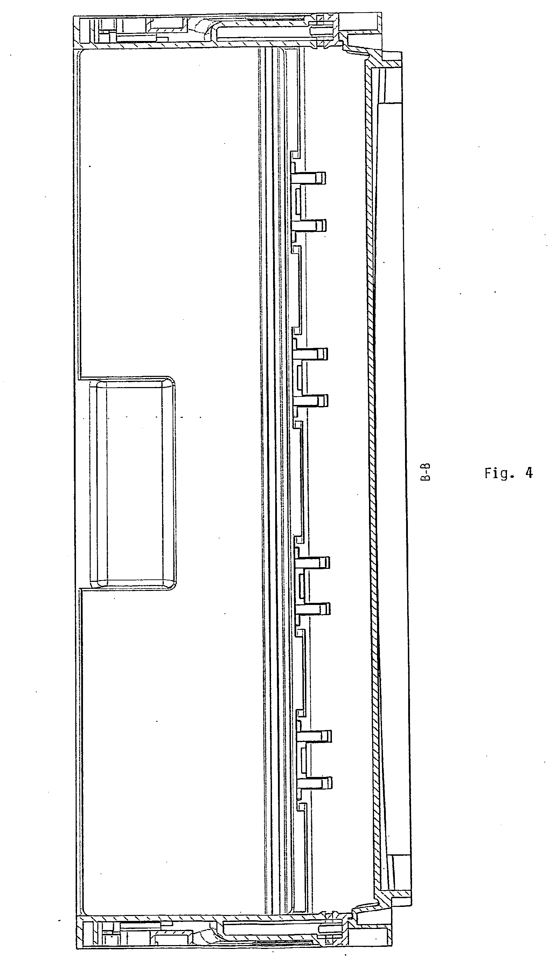

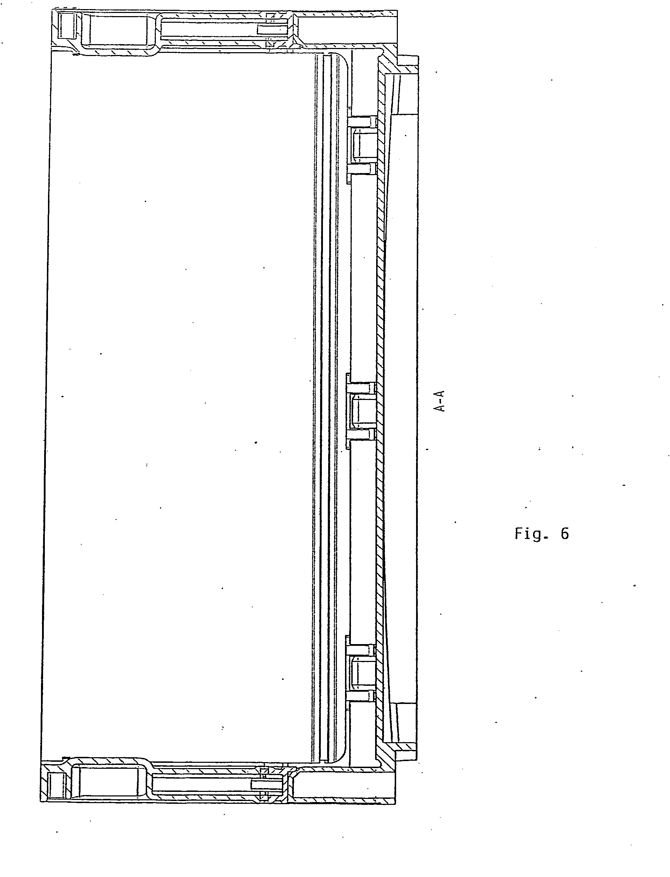

Die Bodenschale trägt an den ansatzweise hochstehenden Leisten Scharniermittel, an denen die Seitenwände angelenkt werden können. Im Bereich dieser Scharniere kann vorgesehen sein, dass die Fischkiste zusätzliche Öffnungen - zusätzlich zu den Ablauföffnungen - aufweist. Die Bodenschale trägt ferner an ihrer Unterseite einen umlaufenden rechteckigen Wulst, welcher einer Stapelung gleichartiger Fischkisten dient (am besten zu erkennen in Fig. 4 und 6). Der rechteckige Wulst einer höher gestapelten Kiste passt auf die rechteckige Oberseite einer unteren Fischkiste mit aufgerichteten Seitenwänden.

Die Bodenplatte weist bis auf die beschriebenen seitlichen Ablauföffnungen eine geschlossene Bodenausbildung auf. Die geschlossene Bodenausbildung verhindert sowohl ein Abtropfen von Flüssigkeit von einer höher gelegenen Fischkiste auf eine darunter befindliche Fischkiste; sie dient aber auch der Kühlung und Thermoisolierung ihres Inhalts. Die geschlossene Ausführung des Bodens kann einfach sein wie beim dargestellten Ausführungsbeispiel (unter dem Gesichtspunkt der Gewichtsersparnis), sie kann jedoch auch doppelwandig sein (unter dem Gesichtspunkt der Isolierung).

Als nächstes werden die Seitenwände beschrieben, die - wie bereits dargelegt - über Scharniere klappbar an die Bodenschafe in der richtigen Höhe angelenkt sind, um ein problemloses Einklappen für einen gereinigten Rücktransport oder für eine gereinigte Lagerung zu erlauben. Für einen Transport werden zunächst die langen Seitenwände aufgeklappt. Sie weisen eine geschlossene, im Wesentlichen doppelwandige Ausführung auf. Die doppelwandige, mit einem eingeschlossenen Luftpolster versehene Wandausführung erhöht entscheidend den Wärmeübergangswiderstand von dem eisgekühlten Transportgut zur Umgebungstemperatur. Die Doppelwandigkeit wird beim Spritzguss des Kunststoffs durch einen geeigneten Kern (nicht dargestellt) erzielt. Nach dem Zurückziehen dieses Spritzkerns wird ein Fußstück im heißen Zustand angeschweißt, wodurch das Luftpolster geschlossen wird.

Im Rahmen der doppelwandigen Ausführung ist an jeder Längsseite auch ein Handgriff zur Handhabung der Fischkiste eingelassen. Aus Gründen der Thermo-Isolierung ist dieser Handgriff jedoch nicht wie üblich mit einem offenen Durchgriff versehen, sondern gehorcht seinerseits dem Prinzip der geschlossenen Wandausführung.

Schließlich sind die langen Seitenwände in Richtung der senkrechten Verbindungsnähte mit Anschlägen einerseits und mit Rastaufnahmen oder Fallen andererseits, also mit Verriegelungsvorrichtungen für die kurzen Seitenwände versehen.

Die kurzen Seitenwände weisen ebenfalls Scharniere zur Verbindung mit der Bodenschale auf, welche Scharnier-Verbindungen durch Einrasten von Ösen der Seitenwände in die Ansatzstücke des Bodens entstehen. Eine kurze Seitenwand hat im Ausführungsbeispiel drei solche Verbindungsösen, während eine lange Seitenwand im Ausführungsbeispiel vier solche Verbindungsösen in Richtung Boden aufweist.

Die senkrechten Verbindungsnähte werden im aufgerichteten Zustand durch Anschlagleisten der kurzen Seitenteile in Verbindung mit einem Zentrierstift der kurzen Seitenteile gesichert, wobei die Zentrierstifte in kleine Öffnungen in den Anschlägen der langen Seitenteile eingreifen. Als ver- und entriegelbarer Verschluss - im Ausführungsbeispiel mit dunklerer Farbe dargestellt - wird ein so genannter Liftlock-Verschluss verwendet, wie er im Stand der Technik bekannt ist. Ein Anheben des Bügels gegen die Federkraft von vier Kunststofflaschen entriegelt den Verschluss. Darüber hinaus sind der Verschlussriegel der kurzen Seitenwand und die entsprechende Falle der langen Seitenwand aber auch so ausgebildet, dass sie bei einem Einschlagen der kurzen Seitenwand elastisch an der Haltestelle nachgeben. In der Praxis muss mit einer derartigen Handhabung des Einschlagens durch das logistische Unternehmen gerechnet werden.

Schließlich weisen die kurzen Seitenwände auch Einschubklammern auf, in denen ein Schild aus Papier, Karton oder Kunststoff eingesetzt werden kann, um die Kiste und ihren Inhalt zu markieren und zu bezeichnen.

In aufgerichteter Stellung ist die Oberseite der vier Seitenwände eben und deshalb geeignet, eine weitere Kiste gleicher Bauart aufgestapelt aufzunehmen. Die Formgebung an der Stapelstelle (oberer Rand bzw. Wulst der Bodenplatte) eignet sich besonders gut dafür, dass jeder Faltbehälter mittels einer Kunststofffolie (nicht dargestellt) abgedeckt wird, wie es im Stand der Technik bekannt ist. Die Stapelbarkeit des Faltbehälters wird durch dieses Abdecken, welches die Thermoisolierung erhöht, nicht beeinträchtigt. Die Verbindung der Folie mit dem oberen Rand des Behälters geschieht in bekannter Weise durch Aufsiegeln, Aufkleben oder Aufschweißen. Nach Gebrauch kann diese Folie leicht entfernt werden, bevor der Behälter vom Transportgut entleert, anschließend gereinigt, zusammengeklappt und zur weiteren Verwendung gestapelt und gelagert oder rücktransportiert wird. Gelegentlich wird es auch genügen, dass nur der oberste Behälter eines Stapels mit einer Folie abgedeckt ist.

Die Formgebung des hier geschützten Faltbehälters für den Transport von Frischfisch oder anderen eisgekühlten Gütern wird im Wesentlichen dadurch erzeugt, dass ein Spritzgusswerkzeug (nicht dargestellt) einen wesentlichen Teil des Kunststoffbehälters formmäßig bestimmt. Durch Kunststoffspritzguss entsteht insbesondere die Bodenschale mit ihren Öffnungen und mit ihren Schamieransätzen. Durch Kunststoffspritzguss entstehen auch die Seitenteile, insbesondere deren doppelwandige Ausführung mit Hilfe eines Spritzgusskerns, wobei anschließend nach dem Zurückziehen des Spritzgusskerns das genannte Fußstück, das die Scharniere trägt, an die Doppelwand angeschweißt wird. Beim kurzen Seitenteil wird ebenfalls das Fußstück an die Doppelwand angeschweißt und anschließend der Liftlock-Verschluss, der getrennt hergestellt wurde, federnd eingesetzt.

## Patentansprüche

1. Stapelbarer Faltbehälter für den Transport von Frischfisch oder anderen eisgekühlten Gütern wie Fleisch, Käse oder dergleichen,
wobei der Faltbehälter im Wesentlichen durch Kunststoffspritzguss von Seitenwänden und einem Boden hergestellt ist,
wobei vier auf den Boden klappbare Seitenwände und/oder der Boden eine doppelwandige Ausführung mit einem geschlossenen Luftpolster aufweisen
**dadurch gekennzeichnet, dass**
der Boden schalenförmig mit hochstehenden Leisten ausgeführt ist, wobei an den hochstehenden Leisten Scharniermittel vorgesehen sind, an denen die klappbaren Seitenwände angelenkt sind, wobei der Boden separat von den Scharniermitteln seitliche Ablauföffnungen an den vier Ecken aufweist, wobei der Boden bis auf die seitlichen Ablauföffnungen und optionale Zusatzöffnungen im Bereich der Scharniere eine geschlossene Bodenausbildung aufweist, wobei die seitlichen Ablauföffnungen im Bodenbereich für den Durchtritt von Schmelzwasser so angebracht sind, dass sie Schmelzwasser aus dem Bodenbereich des Faltbehälters derart nach Aussen abtropfen lassen, dass in Verbindung mit der geschlossenen Bodenausbildung ein Abtropfen von Schmelzwasser in einen im gestapelten Zustand darunter liegenden Faltbehälter verhindert wird.

2. Faltbehälter nach Anspruch 1, **dadurch gekennzeichnet, dass** nur die Seitenwände, und nicht der Boden, die doppelwandige Ausführung mit dem geschlossenen Luftpolster aufweisen.

3. Faltbehälter nach Anspruch 1 oder 2, **dadurch gekennzeichnet, dass** Zusatzöffnungen im Bereich der Scharniermittel vorgesehen sind, welche den Boden und die Seitenwände klappbar verbinden.

4. Faltbehälter nach Anspruch 1 bis 3, **gekennzeichnet durch** optionale Stopfen oder Stöpsel, mit denen die Ablauföffnungen bei Bedarf verschlossen werden können, um ein Abtropfen von beispielsweise verschmutztem Schmelzwasser zu verhindern.

5. Faltbehälter nach Anspruch 1 bis 4, **dadurch gekennzeichnet, dass** ein sogenannter Liftlock-Verschluss vorgesehen ist, um die klappbaren Seitenwände in aufgerichteter Stellung gegeneinander zu verriegeln, und dass dieser Verschluss beschädigungsfrei gelöst werden kann sowohl durch die bekannte Liftlock-Bewegung als auch alternativ durch ein sogenanntes Einschlagen der kurzen Seitenwände.

6. Faltbehälter nach einem der Ansprüche 1 bis 5, **dadurch gekennzeichnet, dass** er stapelbar ausgeführt ist, d.h. dass ein gleichartiger Faltbehälter unverrutschbar aufgesetzt oder untergesetzt werden kann.

7. Faltbehälter nach 1 bis 6, **dadurch gekennzeichnet, dass** im oberen Bereich des Faltbehälters eine Deckfolie aufsiegelbar, aufklebbar oder aufschweissbar ist.

## Claims

1. A stackable collapsible container for transporting fresh fish or other ice-cooled goods, such as meat, cheese or the same,
the collapsible container being manufactured essentially by plastic injection molding of side walls and a base,
wherein
four side walls foldable to the base and/or the base comprise a double-walled implementation comprising a closed air cushion,
**characterized in that**
the base is implemented in a bowl shape with vertical ledges, wherein hinge means to which the foldable side walls are hinged are provided at the vertical ledges, wherein the base comprises lateral outflow openings separate from the hinge means, wherein the base comprises, apart from the lateral outflow openings and optional additional openings in the area of the hinge means, a closed base design, the lateral outflow openings for the passage of melt water being mounted in the base area to allow melt water from the base area of the collapsible container to be drained to the outside such that in connection with the closed base design draining of melt water into a collapsible container below the same in a stacked state is prevented.

2. The collapsible container as claimed in claim 1, **characterized in that** only the side walls, but not the base, comprise the double-walled implementation comprising the closed air cushion.

3. The collapsible container as claimed in claim 1 or 2, **characterized in that** in the area of the hinge means additional openings are provided which join the base and the side walls in a foldable manner.

4. The collapsible container as claimed in claims 1 to 3, **characterized by** optional plugs or stoppers with which the openings may be closed off as desired so as to prevent draining of dirty melt water, for example.

5. The collapsible container as claimed in claims 1 to 4, **characterized in that** a so-called liftlock closure is provided to mutually lock the foldable side walls in an upright orientation, and that this closure may be released without damage both by the known liftlock movement and, alternatively, by a so-called knocking-in of the short side walls.

6. The collapsible container as claimed in claims 1 to 5, **characterized in that** it is implemented to be stackable, i.e. that a collapsible container of the same type may be placed upon or below it in a non-slip manner.

7. The collapsible container as claimed in claims 1 to 6, **characterized in that** a cover foil may be sealed on, glued on or welded on in the top area of the collapsible container.

## Revendications

1. Récipient pliable empilable pour le transport de poisson frais ou d'autres marchandises refroidies par de la glace, telles que viande, fromage ou autres,
le récipient pliable étant réalisé substantiellement par moulage par injection de matière plastique de parois latérales et d'un fond,
quatre parois latérales rabattables sur le fond et/ou le fond présentant une réalisation à paroi double avec un coussin d'air fermé,
**caractérisé par le fait que**
le fond est réalisé en forme de plateau avec des bandeaux verticaux, aux bandeaux verticaux étant prévus des moyens de charnière auxquels sont connectés de manière articulée les parois latérales rabattables, le fond présentant, séparément des moyens de charnière, des ouvertures d'écoulement latérales aux quatre coins, le fond présentant, à l'exception des ouvertures d'écoulement latérales et d'ouvertures additionnelles optionnelles à l'endroit des charnières, une réalisation de fond fermée, les ouvertures d'écoulement latérales étant placées dans la zone de fond pour le passage d'eau fondante de sorte qu'elles laissent s'égoutter l'eau fondante de la zone de fond du récipient pliable vers l'extérieur de sorte que soit évité, en connexion avec la réalisation de fond fermée, un égouttage d'eau fondante dans un récipient pliable situé au-dessous à l'état empilé.

2. Récipient pliable selon la revendication 1, **caractérisé par le fait que** seules les parois latérales, et non pas le fond, présentent la réalisation à paroi double avec le coussin d'air fermé.

3. Récipient pliable selon la revendication 1 ou 2, **caractérisé par le fait que** des ouvertures additionnelles sont prévues à l'endroit des moyens de charnière qui relient le fond et les parois latérales de manière rabattable.

4. Récipient pliable selon la revendication 1 à 3, **caractérisé par** des tampons ou bouchons optionnels par lesquels les ouvertures d'écoulement peuvent être obturées en cas de besoin, pour empêcher un égouttage par exemple d'eau fondante souillée.

5. Récipient pliable selon la revendication 1 à 3, **caractérisé par le fait qu'**il est prévu une soi-disant fermeture 'Liftlock', pour verrouiller les parois latérales rabattables l'une contre l'autre en position verticale, et que cette fermeture peut être défaite sans dégâts tant par le mouvement de 'Liftlock' connu que, alternativement, par un rabattement par coup de poing des parois latérales courtes.

6. Récipient pliable selon l'une des revendications 1 à 5, **caractérisé par le fait qu'**il peut être réalisé de manière empilable, c'est-à-dire qu'un récipient pliable de même type peut être placé au-dessus ou au-dessous sans qu'il ne puisse se déplacer.

7. Récipient pliable selon l'une des revendications 1 à 6, **caractérisé par le fait que** dans la zone supérieure du récipient pliable peut être scellé, collé ou soudé un film de recouvrement.
